# EUROPÄISCHE PATENTSCHRIFT

(11) **EP 2 137 564 B1**
(45) Veröffentlichungstag und Bekanntmachung des Hinweises auf die Patenterteilung: **26.01.2011**
(21) Anmeldenummer: 08735186.2
(22) Anmeldetag: 11.04.2008
(51) Int. Cl.: G02B 6/38

(54) **LICHTWELLENLEITERSTECKERTEIL**
OPTICAL WAVEGUIDE PLUG PART
PIÈCE DE CONNECTEUR DE CÂBLE À FIBRE OPTIQUE

(30) Priorität: 13.04.2007 DE 102007017520
(43) Veröffentlichungstag der Anmeldung: 30.12.2009
(73) Patentinhaber: Beckhoff Automation GmbH, 33415 Verl (DE)
(72) Erfinder: SCHUBE, Frank, 51766 Engelskirchen (DE)
(74) Vertreter: Friese, Martin
(86) Internationale Anmeldenummer: PCT/EP2008/002895
(87) Internationale Veröffentlichungsnummer: WO 2008/125304

(56) Entgegenhaltungen:
- EP-A- 0 290 188
- EP-A- 0 517 346
- EP-A- 0 608 627
- EP-A- 0 770 891
- EP-A- 0 803 751
- EP-A- 0 869 378
- EP-A- 1 321 783
- WO-A-03/085434
- WO-A-2007/124883
- DE-A1-102004 058 741
- DE-C1- 10 131 273
- DE-U1- 9 010 357
- FR-A- 2 658 956
- JP-U- 2 029 010
- US-A- 4 986 625
- US-A- 5 044 719
- US-A- 5 121 455
- US-A- 5 452 386
- US-A- 5 553 181
- US-B1- 6 203 211
- US-B1- 6 592 267

## Beschreibung

Die FR 2658956 und die EP0290188 beschreiben Klemmteile mit freistehenden Klemmstegen und zwei Klemmabschnitten für unterschiedliche Abschnitte eines Kabels, die jedoch nicht für einen Steckverbinder geeignet sind.

Das Klemmen von Fasermantel und Faser gleichzeitig zur Vermeidung des sog. "Pistoning" ist beispielsweise aus der US 6203211, der DE 10131273, der WO03085434, der DE102004058741 und der EP0803751 bekannt.

Typische Klemmteile mit aus Seitenteilen vorstehenden Klemmstegen sind aus der DE 9010357U, der JPH0229010U, der EP 0869378 oder der EP 1321783 bekannt.

Steckerstift mit durch Öffnungen einzusetzenden Klemmteilen kennt man beispielsweise aus der US 5044719, der EP0608627 der US 5553181, der US 545238, der US 4986625, der US 5121455, der US2003/0133669, der EP0517346 oder der EP0770981.

Die Erfindung betrifft ein Lichtwellenleitersteckerteil gemäß dem Oberbegriff von Anspruch 1.

Ein derartiger Lichtwellenleitersteckerteil ist beispielsweise aus der DE 101 26 659 A1 bekannt.

Um den Steckerteil wasserdicht auszubilden, wird im Stand der Technik vorgeschlagen, den Lichtwellenleiter in ein in dem Inneren des in den Lichtwellenleitersteckerteils ausgebildetes Innengewinde einzudrehen, das sich in die Isolierung des Lichtwellenleiters einschneidet.

Der bekannte Lichtwellenleitersteckerteil schafft zwar eine gute Abdichtung und einen sicheren Halt des Lichtwellenleiters in dem Lichtwellenleitersteckerteil, hat aber den Nachteil, dass die Herstellung durch das auf den Lichtwellenleiter auszuübende Drehmoment aufwendig und schwierig ist.

Desweiteren sind Lichtwellenleitersteckerteile bekannt, bei denen ein Metallteil in eine Öffnung in dem Lichtwellenleitersteckerteil angeordnet wird und dabei den Kern des Lichtwellenleiters klemmt. Da keine Dichtungselemente vorgesehen sind, sind diese bekannten Lichtwellenleitersteckerteile nicht wasserdicht. Außerdem ist bei diesen bekannten Lichtwellenleitersteckerteilen die durch das Klemmteil bewirkte Zugentlastung des Lichtwellenleiters gering.

Der Erfindung liegt die Aufgabe zugrunde, ein Lichtwellenleitersteckerteil gemäß dem Oberbegriff von Anspruch 1 anzugeben, das leicht herzustellen ist und eine gute Zugentlastung aufweist.

Die Aufgabe der Erfindung wird mit einem Lichtwellenleitersteckerteil gemäß den Merkmalen von Anspruch 1 gelöst. Vorteilhafte Ausgestaltungen der Erfindung sind in den abhängigen Ansprüchen angegeben.

Gemäß einer Ausführung der Erfindung umfasst ein Lichtwellenleitersteckerteil eines Lichtwellenleitersteckverbinders für einen Lichtwellenleiter, der eine Faser und eine Hülle aufweist, einen Kontaktträger zur Aufnahme des Lichtwellenleiters und zumindest ein Klemmteil zum Sichern des Lichtwellenleiters in dem Kontaktträger, wobei das Klemmteil einen ersten Klemmabschnitt mit zumindest einem und vorzugsweise mehreren freistehenden und/oder säulenartigen Klemmstegen zum Klemmen der Hülle des Lichtwellenleiters und einen zweiten Klemmabschnitt mit zumindest einem und vorzugsweise mehreren freistehenden und/oder säulenartigen Klemmstegen zum Klemmen der Faser des Lichtwellenleiters aufweist.

Dadurch ergibt sich der Vorteil einer einfachen Montage und einer besseren Zugentlastung. Bei Lichtwellenleitern mit Zugentlastungsfasern können diese ebenfalls über die Schneidelemente besser gesichert werden. Es können prinzipiell auch mehrere Klemmteile eingesetzt werden, die jeweils die beiden bzw. einen Klemmabschnitt aufweisen. Bevorzugt wird eine Ausführung mit einem Klemmteil, weil das die Montage und die Abdichtung erleichtert.

Die DE 10 2006 019 872 A1 ist eine nachveröffentlichte Anmeldung, die ein Lichtwellenleitersteckerteil mit zwei Klemmabschnitten offenbart, wobei die Klemmabschnitte im Gegensatz zur vorliegenden Erfindung keine freistehenden und/oder säulenartigen Klemmstege umfassen.

Im Sinne der vorliegenden Anmeldung ist der Begriff "freistehende Klemmstege" derart zu verstehen, dass die Klemmstege freistehend ausgebildet sind. Man könnte die freistehenden Klemmstege auch als säulenartige Klemmstege bezeichnen. Mit anderen Worten sind die freistehenden und/oder säulenartigen Klemmstege gemäß der Erfindung auf einer gemeinsamen Basis angeordnet (stehen auf dieser Basis) und weisen keine zusätzlichen seitlichen Abstützungen auf, d.h. dass es keine Streben bzw. Seitenwände gibt, die (seitlich) benachbarte Klemmstege, d.h. Klemmstege, die auf der gleichen Seite des Lichtwellenleiters angeordnet sind, miteinander verbinden.

Es ist klar, dass bei den Ausführungen mit paarweise angeordneten Klemmstegen, die sich gegenüberliegenden Klemmstege eines Paars nicht miteinander verbunden sein können, denn zwischen diesen Klemmstegen soll der Lichtwellenleiter eingeklemmt werden. Das Merkmal "freistehend" bezieht sich deshalb auf die fehlende seitliche Verbindung (oberhalb der Basis) zwischen seitlich benachbarten Klemmstegen.

Erfindungsgemäß können die freistehenden und/oder säulenartigen Klemmstege des ersten und/oder zweiten Klemmabschnitts derart paarweise angeordnet sein, dass die Klemmstege eines jeweiligen Paars bezüglich des Lichtwellenleiters gegenüberliegend angeordnet sind.

Erfindungsgemäß kann bzw. können die freistehenden und/oder säulenartigen Klemmstege des ersten Klemmabschnitts Schneidkanten zum Schneiden in die Hülle des Lichtwellenleiters aufweisen. Alternativ oder zusätzlich kann bzw. können die freistehenden und/oder säulenartigen Klemmstege des zweiten Klemmabschnitts Schneidkanten zum Schneiden in die Faser des Lichtwellenleiters aufweisen. Dabei können die Schneidkanten vorzugsweise im Wesentlichen senkrecht zur der Richtung verlaufen, in der der Lichtwellenleiter in das Lichtwellenleitersteckerteil einsteckbar bzw. eingesteckt ist.

Gemäß der Erfindung können die Schneidkanten im Querschnitt ein widerhakenartiges Profil aufweisen. Dadurch ergibt sich der Vorteil, dass das Widerhakenprofil derart ausgebildet sein kann, dass einer auf den Lichtwellenleiter ausgeübten Zugkraft entgegengewirkt wird. Es ergibt sich somit eine bessere Zugentlastung, weil das Material der Hülle bzw. der Faserisolierung nicht so leicht über die Schneidelemente rutschen kann. Bei der Montage können die Schneidkanten leicht in die Hülle und/oder die Faserisolierung geschnitten werden, wenn, wie bevorzugt, die Widerhakenstruktur senkrecht zur Schnittrichtung verläuft.

Erfindungsgemäß kann bzw. können in dem ersten Klemmabschnitt zumindest ein Stift und vorzugsweise mehrere Stifte zum Eingriff in die Hülle des Lichtwellenleiters ausgebildet sein.

Erfindungsgemäß kann bzw. können in dem zweiten Klemmabschnitt zumindest ein Stift und vorzugsweise mehrere Stifte zum Eingriff in die Faser des Lichtwellenleiters ausgebildet sein.

Erfindungsgemäß kann bzw. können in dem Kontaktträger zumindest ein Stift und vorzugsweise mehrere Stifte zum Eingriff in die Hülle und/oder die Faser des Lichtwellenleiters ausgebildet sein.

Erfindungsgemäß können die Stifte derart angeordnet und ausgebildet sein, dass sie in die Hülle und/oder Faser des Lichtwellenleiters bei der Montage eingreifen.

Erfindungsgemäß können die Stifte derart angeordnet und ausgebildet sein, dass sie die Hülle und/oder Faser des Lichtwellenleiters bei der Montage durchstechen. Dadurch ergibt sich eine noch bessere Zugentlastung.

Insbesondere bei den Ausführungen der Erfindung mit Stiften ist darauf zu achten, dass der Kern des Lichtwellenleiters nicht berührt oder beschädigt wird. Bei den Ausführungen, bei denen die Hülle bzw. der Kern durchstochen wird, sind die Stifte ausserhalb der Mitte anzuordnen. Vorzugsweise werden dann symmetrischangeordnete Paare vorgesehen.

Erfindungsgemäß können die Stifte paarweise gegenüberliegend an dem Kontaktträger und dem Klemmteil angeordnet und ausgebildet sein. Dadurch ergibt sich der Vorteil einer Abstützung, so dass die Stifte unter geringerer Belastung des Lichtwellenleiters in die Hülle bzw. Faser eindringen können.

Erfindungsgemäß können Stifte gegenüberliegend zu zumindest einem Klemmsteg oder einigen Klemmstegen und vorzugsweise gegenüberliegend zu allen Klemmstegen an dem Kontaktträger angeordnet und ausgebildet sein. Dadurch ergibt sich der Vorteil einer Abstützung, so dass die Klemmstege unter geringerer Belastung des Lichtwellenleiters in die Hülle bzw. Faser eindringen können.

Erfindungsgemäß kann bzw. können das Klemmteil und/oder der Kontaktträger zumindest teilweise transparent und/oder transluzent ausgebildet sind. Dadurch ergibt sich der Vorteil, dass die richtige Anordnung des Lichtwellenleiters in dem Lichtwellenleitersteckerteil leicht von außerhalb nach dem Zusammensetzen feststellbar und überprüfbar ist. Erfindungsgemäß kann das Klemmteil vollständig transparent und/oder transluzent ausgebildet sein.

Erfindungsgemäß kann der Kontaktträger zumindest in dem Bereich des Aufnahmeabschnitts für das Klemmteil transparent und/oder transluzent ausgebildet sein.

Erfindungsgemäß kann das Klemmteil und/oder der Kontaktträger zur Kennzeichnung der Position des Lichtwellenleiters in dem Lichtwellenleitersteckerteil farblich markiert sein.

Erfindungsgemäß kann an dem Klemmteil zumindest eine Dichtung angeordnet sein. Dadurch ergibt sich der Vorteil, dass das Lichtwellenleitersteckerteil leicht herstellbar ist und eine gute Dichtigkeit aufweist.

Erfindungsgemäß kann die Dichtung eine O-Ringdichtung sein.

Erfindungsgemäß kann das Klemmteil einen Flansch zur Aufnahme der Dichtung aufweisen.

Erfindungsgemäß kann das Klemmteil eine Nut zur Aufnahme der Dichtung aufweisen. Alternativ oder zusätzlich kann der Kontaktträger eine Nut zur Aufnahme der Dichtung aufweisen. Alternativ oder zusätzlich kann der Kontaktträger eine Stufe zur Aufnahme der Dichtung aufweisen.

Erfindungsgemäß kann die Dichtung entlang der Öffnung des Kontaktträgers angeordnet sein, in der das Klemmteil zur Sicherung des Lichtwellenleiters angeordnet ist bzw. anordbar ist.

Erfindungsgemäß kann eine (eventuell weitere) Dichtung vorgesehen sein, die derart angeordnet ist, dass die Faser des Lichtwellenleiters durch die Dichtung steckbar ist. Dies stellt eine alternative oder zusätzliche Lösung zur Anordung der Dichtung dar. Die (weitere) Dichtung wird in den Kontaktträger eingesetzt, der Lichtwellenleiter in das Lichtwellenleitersteckerteil geschoben bzw. gedreht und mit dem Klemmteil gesichert. Vorzugsweise kann die (weitere) Dichtung dabei vom Klemmteil umfasst werden bzw. eine seitliche Anlage bilden.

Erfindungsgemäß kann der Kontaktträger eine seitliche Öffnung zur Aufnahme des zumindest einen Klemmteils aufweisen.

Erfindungsgemäß kann die Außenkontur des Klemmteils im Wesentlichen der Außenkontur des Kontaktträgers entsprechen. Alternativ oder zusätzlich kann die Außenkontur des Klemmteils im Wesentlichen flach ausgebildet sein.

Erfindungsgemäß kann die Außenkontur des Klemmteils gewölbt sein. Diese Ausführung ist bei transparenten oder transluzenten Klemmteilen besonders vorteilhaft, weil die Form vorteilhafterweise derart wählbar ist, dass eine Vergrößerung der Positionsanzeige des Lichtwellenleiters im Kontaktträger möglich ist (Lupenfunktion).

Erfindungsgemäß kann der Kontaktträger einen Querschnitt aufweisen, der im Wesentlichen rund, oval, ellipsenförmig, rechteckig (vorzugsweise mit abgerundeten Ecken) ist.

Erfindungsgemäß kann der Kontaktträger einen Querschnitt aufweisen, der asymmetrisch ist. Die asymmetrische Ausführung des Querschnitts hat den Vorteil, dass eine "Codierung" die richtige Positionierung des Klemmteils sicherstellt. Alternativ kann das Klemmteil auch vollkommen symmetrisch ausgebildet sein, so dass es in beiden Richtungen richtig anordbar ist. Das erleichtert die Montage, bedeutet aber einen größeren Bauraum und höhere Material- und Fertigungskosten.

Erfindungsgemäß kann die Faser einen Kern aus optisch transparenten Material geringer Dämpfung und einen den Kern umschließenden Mantel aufweisen, der eine niedrigere Brechzahl als der Kern hat. Um den Mantel ist eine Isolierung vorgesehen. Vorteilhafterweise weist der Lichtwellenleiter desweiteren Zugentlastungsfasern auf.

Erfindungsgemäß kann der Kern aus Kunststoff oder Glas ausgebildet sein.

Erfindungsgemäß kann der Kontaktträger ein Rohr aufweisen, das vorzugsweise zur Aufnahme der Faser bzw. des Kerns der Faser des Lichtwellenleiters ausgebildet ist.

Erfindungsgemäß kann das Lichtwellenleitersteckerteil eine Kappe aufweisen, die eine Durchtrittsöffnung für den Lichtwellenleiter aufweist und vorzugsweise wasserdicht mit dem Kontaktträger verbindbar ist.

Erfindungsgemäß kann das Lichtwellenleitersteckerteil mit einem Gegensteckerteil zusammensteckbar sein.

Erfindungsgemäß kann das Lichtwellenleitersteckerteil den bzw. die Zapfen oder ein Aufnahmeteil eines Bajonettverschlusses aufweisen.

Erfindungsgemäß kann das Klemmteil aus Metall und/oder Kunststoff ausgebildet sein.

Erfindungsgemäß kann das Klemmteil ein Druckgussteil sein.

-Erfindungsgemäß kann der Kontaktträger aus Metall und/oder Kunststoff ausgebildet sein.

Erfindungsgemäß kann die Kappe und der Kontaktträger als ein Teil ausgebildet sein.

Erfindungsgemäß kann das Klemmteil und die Dichtung als ein Teil ausgebildet sein.

Erfindungsgemäß kann der Kontaktträger und die Dichtung als ein Teil ausgebildet sein.

Erfindungsgemäß kann der Kontaktträger Gewindeabschnitte zum Einschrauben der Hülle und/oder der Faser des Lichtwellenleiters aufweisen. Diese Befestigung und Zugentlastung kann bei den Ausführungen der Erfindung mit den zumindest zwei Klemmabschnitten des Klemmteils zusätzlich vorgesehen werden. Dann wird der Lichtwellenleiter zunächst in das Lichtwellenleitersteckerteil eingeschraubt und anschließend das Klemmteil in den Kontaktträger geschoben, wobei der Lichtwellenleiter geklemmt wird.

Die Erfindung betrifft auch einen Brückenstecker mit mindestens einem Lichtwellenleitersteckerteil gemäß der Erfindung.

Vorzugsweise weist der erfindungsgemäße Brückenstecker zwei erfindungsgemäße Lichtwellenleitersteckerteile auf.

Dabei können vorzugsweise die Klemmteile der beiden Lichtwellenleitersteckerteile miteinander verbunden sein.

Erfindungsgemäß können die Klemmteile der beiden Lichtwellenleitersteckerteile einstückig ausgebildet sein. Erfindungsgemäß können die Klemmteile der beiden Lichtwellenleitersteckerteile starr miteinander verbunden sein.

Erfindungsgemäß können die Klemmteile der beiden Lichtwellenleitersteckerteile gegenüberliegend angeordnet sind.

Erfindungsgemäß können die Klemmteile der beiden Lichtwellenleitersteckerteile auch flexibel miteinander verbunden sein. Dadurch ergibt sich der Vorteil, dass der Abstand variabel einstellbar ist.

Die Erfindung betrifft auch einen Lichtwellenleitersteckverbinder mit einem Lichtwellenleitersteckerteil, das die oben genannten Merkmale umfasst, und einem Gegensteckerteil.

Erfindungsgemäß kann das Gegensteckerteil einen Schacht zur Aufnahme des Rohrs bzw. des Kerns des Lichtwellenleiters aufweisen.

Die Erfindung wird im folgenden anhand der in den Figuren gezeigten Ausführungsbeispiele näher beschrieben.
- Fig. 1: zeigt eine Explosionszeichung eines Lichtwellenleitersteckerteils mit einem Sockel eines Gegensteckerteils gemäß einer ersten Ausführung der Erfindung.
- Fig. 2: zeigt eine perspektivische Ansicht des Lichtwellenleitersteckerteils gemäß Fig. 1.
- Fig. 3: zeigt eine perspektivische Ansicht des Klemmver- schlusses des Lichtwellenleitersteckerteils von Fig. 1.
- Fig. 4: zeigt eine Aufsicht eines Lichtwellenleitersteck- verbinders mit einem Lichtwellenleitersteckerteil gemäß Fig. 1.
- Fig. 5: zeigt eine Schnittansicht gemäß der Schnittlinie V-V in Fig. 4.
- Fig. 6: zeigt eine Schnittansicht gemäß der Schnittlinie VI-VI in Fig. 4.
- Fig. 7: zeigt eine Schnittansicht gemäß der Schnittlinie VII-VII in Fig. 6.
- Fig. 8: zeigt eine Schnittansicht gemäß der Schnittlinie VIII-VIII in Fig. 6.
- Fig. 9: zeigt eine Schnittansicht gemäß der Schnittlinie IX-IX in Fig. 6.

In der Beschreibung der Ausführungsbeispiele werden folgende Bezugszeichen verwendet:
- 10: Lichtwellenleiter
- 11: Kern (optisch transparentes Material geringer Dämpfung, z.B. Quarzglas, transparenter Kunststoff) mit Mantel (niedrigere Brechzahl als Kern; Kern und Mantel bilden die "optische" Faser)
- 12: Isolierung (auch Faserisolierung) Die Isolierung bildet mit dem Kern die Faser.
- 13: Hülle (auch Beschichtung oder Aussenmantel) Zugentlastungsfasern sind bevorzugt zwischen Hülle und Isolierung vorhanden, werden jedoch der Übersicht halber in der vorliegenden Anmeldung nicht gezeigt.
- 20: Kappe (auch Dichtkappe)
- 21: Dichtlippe
- 22: Schnapprand
- 30: Kontaktträger
- 31: Rohr
- 32: Rohransatz
- 33: Wulst (nach außen ragend)
- 34: Rohrende (tritt in berührende oder fast berührende Anlage mit einem Sende-/Empfangselement)
- 35: Rastelement
- 36: Aussparung
- 37: Stift

- 40: Klemmteil (zum Klemmen des Lichtwellenleiter in dem Kontaktträger und zum Verschliessen des Kontaktträgers) 41 erster KLemmabschnitt (beispielsweise für Hülle 13)
- 42: zweiter Klemmabschnitt (beispielsweise für Isolierung 12)
- 411: Schneidelemente (im ersten Klemmabschnitt 41)
- 412: Schneidelemente (im ersten Klemmabschnitt 41)
- 421: Schneidelemente (im zweiten Klemmabschnitt 42)
- 422: Schneidelemente (im zweiten Klemmabschnitt 42)
- 43: Stift
- 45: Flansch
- 46: Rastelement
- 47: Wandung
- 48: Verbindungselement (beispielsweise von zwei Klemmteilen)

- 50: Dichtungselement (O-Ring)

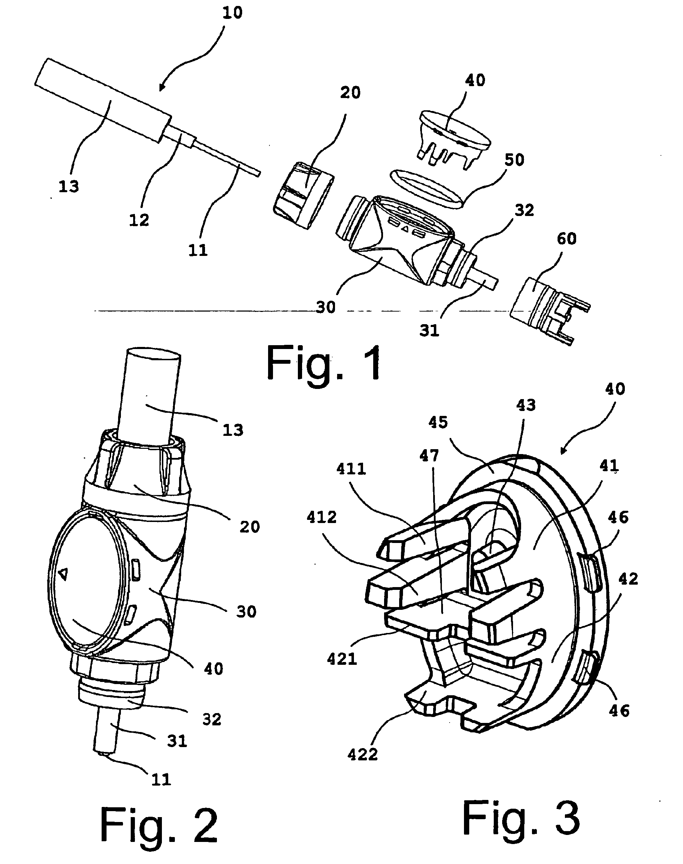

Die Figuren 1 bis 9 zeigen ein Ausführungsbeispiel der Erfindung.

Ein Lichtwellenleiter 10 umfasst einen Kern 11, der von einem Mantel niedrigerer Brechzahl umgeben ist, um den eine Isolierung 12 vorgesehen ist. Um die Isolierung 12 sind nicht dargestellte Zugentlastungsfasern vorgesehen. Desweiteren weist der Lichtwellenleiter eine Hülle 13 auf. Das in den Fig. 1 bis 9 gezeigte Ausführungsbeispiel der Erfindung umfasst einen Kontaktträger 30, der an dem Lichtwellenleiter 10 befestigt werden kann. Dazu wird der Lichtwellenleiter 10 entsprechend der Darstellung in Fig. 1 abisoliert, die Kappe 20 auf den Lichtwellenleiter 10 geschoben, und der Lichtwellenleiter in den Kontaktträger 30 derart eingeschoben, dass der Kern 11 in das Rohr 31 eingreift. Anschließend wird das Klemmteil 40 mit dem Dichtungselement 50 in die Öffnung in dem Kontaktträger 30 eingesetzt. Das Lichtwellenleitersteckerteil ist somit wasserdicht abgedichtet. Außerdem ist der Lichtwellenleiter sicher und fest in dem Kontaktträger 30 aufgenommen, weil die beiden Klemmabschnitte 41 bzw. 42 mit ihren Schneidelementen 411, 411 bzw. 421, 422 in die Isolierung 12 bzw. die Hülle 13 eingreifen.

Das Klemmteil 40 weist eine ovalen bzw. elliptischen Querschnitt auf. An seinem Außenrand ist ein Flansch 45 vorgesehen, der das Dichtungselement 50 an dem Kontaktträger 30 sichert. Alternative Anordnungen für das Dichtungselement sind denkbar.

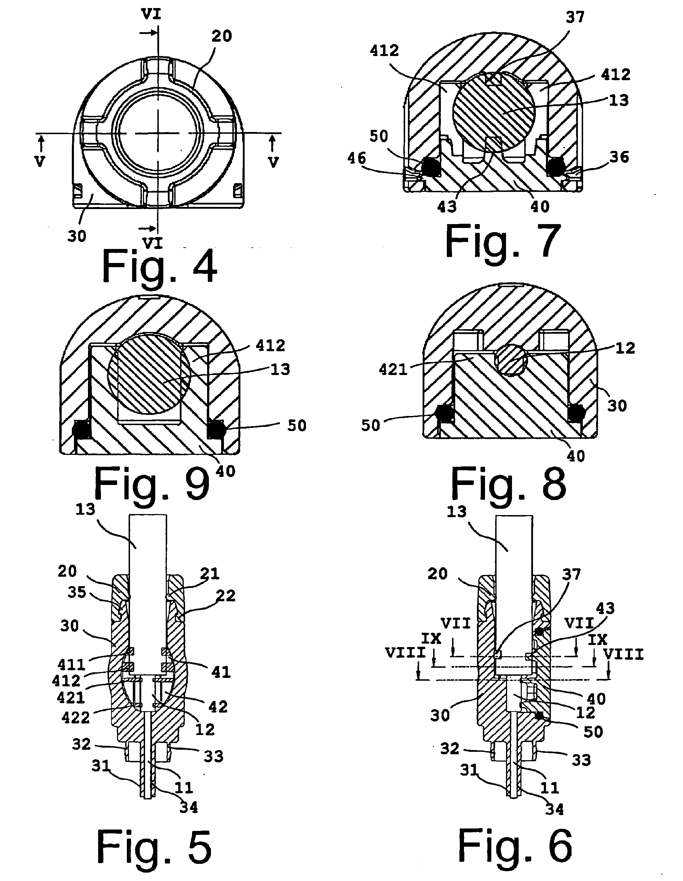

An seinem Außenrand weist das Klemmteil 40 ferner Rastelemente 46 auf, die in entsprechende Aussparungen 36 an dem Kontaktträger 30 eingreifen (siehe Fig. 7), um das Klemmteil 40 an dem Kontaktträger 30 zu sichern.

In Fig. 3 und Fig. 5 kann man deutlich die beiden Klemmabschnitte 41 bzw. 42 sehen, die jeweils mit freistehenden und/oder säulenartigen Klemmstegen 411, 412 bzw. 421, 422 versehen sind.

Zusätzlich zu den Klemmstegen sind vorteilhafterweise Stifte 37 und 43 vorgesehen, die im montierten Zustand in die Hülle 13 zur Zugentlastung eingreifen. Der Stift 37 ist an dem Kontaktträger 30 in dem dem ersten Klemmabschnitt 41 des Klemmteils 40 gegenüberliegenden Bereich vorgesehen. Der Stift 43 ist in dem ersten Klemmabschnitt 41 des Klemmteils an dem Klemmteil 40 ausgebildet. Es ist möglich nur einen der beiden Stifte vorzusehen oder mehrere entsprechende Stifte an dem Konttaktträger und/oder Klemmteil auszubilden. Es ist ferner möglich, zusätzlich oder alternativ entsprechende Stifte in dem zweiten Klemmabschnitt 42 des Klemmteils 40 bzw. in dem diesem Abschnitt gegenüberliegenden Bereich des Kontaktträgers 30 vorzusehen, die in die Faserisolierung 12 zur weiteren Zugentlastung eingreifen. Vorzugsweise wiesen die Stifte scharfe Kanten bzw. Spitzen auf, damit sie leicht in die Hülle bzw. Faserisolierung eindringen können.

Der Kontaktträger 30 weist an seinem dem Lichtwellenleiter 10 abgewandten Ende einen Rohransatz 32 mit einem nach außen ragenden Wulst 33 auf, um in ein entsprechendes Gegensteckerteil, d.h. den bei den anderen beiden Ausführungsbeispielen gezeigten Sockel 60 einzugreifen. Das Rohr 31 weist ein Rohrende 34 auf, das beim Einsetzen des Lichtwellenleitersteckerteils in berührende bzw. fast berührende Anlage mit einem Sende-/Empfangselement tritt.

Die Kappe 20 weist Dichtlippen 21 auf, um das Lichtwellenleitersteckerteil gegen den Lichtwellenleiter 10 abzudichten. Die Kappe 20 umfasst ferner einen Schnapprand 22, der zur Befestigung der Kappe 20 an dem Kontaktträger 30 um ein Rastelement 35 am Ende des Kontaktträgers greift.

Das Klemmteil 40 weist eine Wandung 47 auf, an der der Lichtwellenleiter 10 möglichst dicht anliegt. Das Klemmteil 40 kann transparent oder transluzent ausgebildet sein, damit die richtige Position des Lichtwellenleiters 10 in dem Lichtwellenleitersteckerteil von außen nach erfolgter Montage überprüft und sichergestellt werden kann.

Der Aufbau des Sockels zur Aufnahme des Lichtwellenleitersteckerteils ist dem Fachmann beispielsweise aus der DE 101 26 659 A1 bekannt, deren gesamter Offenbarungsgehalt durch Bezugnahme in die vorliegende Offenbarung aufgenommen ist.

Während das Klemmteil 40 des in den Figuren 1 bis 9 gezeigten Ausführungsbeispiels einen ovalen bzw. elliptischen Querschnitt (siehe beispielsweise Fig. 5) aufweist, kann gemäß alternativen Ausführungsbeispielen das Klemmteil auch einen runden bzw. kreisförmigen Querschnitt aufweisen. Andere Formen sind denkbar. Beispielsweise kann das Klemmteil außen nicht flach sondern gewölbt bzw. entsprechend der Außenkontour des Kontaktträgers ausgebildet sein.

Gemäß einer Variante des Klemmteils kann die Dichtung derart angeordnet sein, dass die Dichtung den Lichtwellenleiter umschließt. Diese Ausführung ergibt gute Ergebnisse, wird aber nicht so sehr bevorzugt, weil prinzipiell Wasser an dem Klemmstück vorbei zwischen Hülle und Isolierung gelangen kann. Daher wird bei dieser Ausführungsform bevorzugt, zusätzlich eine Dichtung zwischen dem Klemmstück und dem Kontaktträger vorzusehen. Diese Ausführung hat desweiteren eine etwas geringere maximale erreichbare Zugentlastung, denn der zweite Klemmabschnitt ist infolge der Dichtungsanordnung des Dichtungselementes kürzerbauend bzw. das Klemmstück ist entsprechend längerbauend als bei dem in den Figuren 1 bis 9 gezeigten und oben beschriebenen Ausführungsbeispiel.

## Patentansprüche

1. Lichtwellenleitersteckerteil eines Lichtwellenleitersteckverbinders für einen Lichtwellenleiter, der eine Faser und eine Hülle aufweist, mit einem Kontaktträger zur Aufnahme des Lichtwellenleiters und zumindest einem Klemmteil zum Sichern der Lichtwellenleiters in dem Kontaktträger,
**dadurch gekennzeichnet, dass** das Klemmteil einen ersten Klemmabschnitt mit zumindest einem und vorzugsweise mehreren freistehenden und/oder säulenartigen Klemmstege zum Klemmen der Hülle des Lichtwellenleiters und einen zweiten Klemmabschnitt mit zumindest einem und vorzugsweise mehreren freistehenden und/oder säulenartigen Klemmstegen zum Klemmen der Faser des Lichtwellenleiters aufweist.

2. Lichtwellenleitersteckerteil nach Anspruch 1, bei dem die freistehenden und/oder säulenartigen Klemmstege des ersten und/oder zweiten Klemmabschnitts derart paarweise angeordnet sind, dass die Klemmstege eines jeweiligen Paars bezüglich des Lichtwellenleiters gegenüberliegend angeordnet sind.

3. Lichtwellenleitersteckerteil nach einem der vorhergehenden Ansprüche, bei dem die freistehenden und/oder säulenartigen Klemmstege des ersten-Klemmabschnitts Schneidkanten zum Schneiden in die Hülle des Lichtwellenleiters aufweisen.

4. Lichtwellerileitersteckerteil nach einem der vorhergehenden Ansprüche, bei dem die freistehenden und/oder säulenartigen Klemmstege des zweiten Klemmabschnitts Schneidkanten zum Schneiden in die Faser des Lichtwellenleiters aufweisen.

5. Lichtwellenleitersteckerteil nach Anspruch 3 oder 4, bei dem die Schneidkanten im Wesentlichen senkrecht zur der Richtung verlaufen, in der der Lichtwellenleiter in das Lichtwellenleitersteckerteil einsteckbar bzw. eingesteckt ist.

6. Lichtwellenleitersteckerteil nach einem der drei vorhergehenden Ansprüche, bei dem die freistehenden und/oder säulenartigen Klemmstege des ersten und/oder zweiten Klemmabschnitts im Querschnitt ein widerhakenartiges Profil aufweisen.

7. Lichtwellenleitersteckerteil nach einem der vorhergehenden Ansprüche, bei dem in dem ersten Klemmabschnitt zumindest ein Stift und vorzugsweise mehrere Stifte zum Eingriff in die Hülle des Lichtwellenleiters ausgebildet sind,
und/oder bei dem in dem zweiten Klemmabschnitt zumindest ein Stift und vorzugsweise mehrere Stifte zum Eingriff in die Faser des Lichtwellenleiters ausgebildet sind,
und/oder bei dem in dem Kontaktträger zumindest ein Stift und vorzugsweise mehrere Stifte zum Eingriff in die Hülle und/oder die Faser des Lichtwellenleiters ausgebildet sind.

8. Lichtwellenleitersteckerteil nach Anspruch 7, bei dem die Stifte derart angeordnet und ausgebildet sind, dass sie in die Hülle und/oder Faser des Lichtwellenleiters bei der Montage eingreifen,
und/oder bei dem die Stifte derart angeordnet und ausgebildet sind, dass sie die Hülle und/oder Faser des Lichtwellenleiters bei der Montage durchstechen, und/oder bei dem die Stifte paarweise gegenüberliegend an dem Kontaktträger und dem Klemmteil angeordnet und ausgebildet sind,
und/oder bei dem Stifte gegenüberliegend zu zumindest einem Klemmsteg oder einigen Klemmstegen und vorzugsweise gegenüberliegend zu allen Klemmstegen an dem Kontaktträger angeordnet und ausgebildet sind.

9. Lichtwellenleitersteckerteil nach einem der vorhergehenden Ansprüche, bei dem das Klemmteil und/oder der Kontaktträger zumindest teilweise transparent und/oder transluzent ausgebildet sind.

10. Lichtwellenleitersteckerteil nach einem der vorhergehenden Ansprüche, bei dem das Klemmteil vollständig transparent und/oder transluzent ausgebildet ist.

11. Lichtwellenleitersteckerteil nach einem der vorhergehenden Ansprüche, bei dem der Kontaktträger zumindest in dem Bereich der Aufnahmeabschnitts für das Klemmteil transparent und/oder transluzent ausgebildet ist.

12. Lichtwellenleitersteckerteil nach einem der vorhergehenden Ansprüche, bei dem das Klemmteil und/oder der Kontaktträger zur Kennzeichnung der Position des Lichtwellenleiters in dem Lichtwellenleitersteckerteil farblich markiert sind.

13. Lichtwellenleitersteckerteil nach einem der vorhergehenden Ansprüche,-bei-dem an dem Klemmteil zumindest eine Dichtung angeordnet ist.

14. Lichtwellenleitersteckerteil nach Anspruch 13, bei dem die Dichtung eine O-Ringdichtung ist,
und/oder bei dem die Dichtung entlang der Öffnung des Kontaktträgers angeordnet ist, in der das Klemmteil zur Sicherung des Lichtwellenleiters angeordnet ist bzw. anordbar ist,
und/oder bei dem eine (weitere) Dichtung vorgesehen ist, die derart angeordnet ist, dass die Faser des Lichtwellenleiters durch die Dichtung steckbar ist.

15. Lichtwellenleitersteckerteil nach Anspruch 13 oder 14, bei dem das Klemmteil einen Flansch und/oder eine Nut zur Aufnahme der Dichtung aufweist,
und/oder bei dem der Kontaktträger eine Nut und/oder eine Stufe zur Aufnahme der Dichtung aufweist.

## Claims

1. Optical waveguide plug part of an optical waveguide plug connector for an optical waveguide, which has a fibre and a buffer tube, comprising a contact carrier for holding the optical waveguide and at least one clamping part for securing the optical waveguide in the contact carrier,
**characterized in that** the clamping part has a first clamping section with at least one, and preferably a plurality of, free-standing and/or columnar clamping webs for clamping the buffer tube of the optical waveguide, and a second clamping section with at least one, and preferably a plurality of, free-standing and/or columnar clamping webs for clamping the fibre of the optical waveguide.

2. Optical waveguide plug part according to Claim 1, in which the free-standing and/or columnar clamping webs of the first and/or second clamping section are arranged in pairs in such a way that the clamping webs of a respective pair are arranged opposite one another with reference to the optical waveguide.

3. Optical waveguide plug part according to one of the preceding claims, in which the free-standing and/or columnar clamping webs of the first clamping section have cutting edges for cutting into the buffer tube of the optical waveguide.

4. Optical waveguide plug part according to one of the preceding claims, in which the free-standing and/or columnar clamping webs of the second clamping section have cutting edges for cutting into the fibre of the optical waveguide.

5. Optical waveguide plug part according to Claim 3 or 4, in which the cutting edges run substantially perpendicular to the direction in which the optical waveguide can be or is inserted into the optical waveguide plug part.

6. Optical waveguide plug part according to one of the three preceding claims, in which the free-standing and/or columnar clamping webs of the first and/or second clamping section have, in cross section, a barb-like profile.

7. Optical waveguide plug part according to one of the preceding claims, in which at least one pin and, preferably a plurality of pins are formed in the first clamping section for the purpose of engaging in the buffer tube of the optical waveguide, and/or in which at least one pin and, preferably a plurality of pins are formed in the second clamping section for the purpose of engaging in the fibre of the optical waveguide, and/or in which at least one pin and preferably a plurality of pins are formed in the contact carrier for the purpose of engaging in the buffer tube and/or the fibre of the optical waveguide.

8. Optical waveguide plug part according to Claim 7, in which the pins are arranged and formed in such a way that they engage in the buffer tube and/or the fibre of the optical waveguide upon assembly, and/or in which the pins are arranged and formed in such a way that they pierce the buffer tube and/or the fibre of the optical waveguide upon assembly, and/or in which the pins are arranged and formed in pairs opposite one another on the contact carrier and the clamping part, and/or in which pins are arranged and formed on the contact carrier opposite one another in relation to at least one clamping web or a few clamping webs and preferably opposite one another in relation to all clamping webs.

9. Optical waveguide plug part according to one of the preceding claims, in which the clamping part and/or the contact carrier are/is designed to be at least partially transparent and/or translucent.

10. Optical waveguide plug part according to one of the preceding claims, in which the clamping part is designed to be completely transparent and/or translucent.

11. Optical waveguide plug part according to one of the preceding claims, in which the contact carrier is designed to be transparent and/or translucent at least in the region of the holding section for the clamping part.

12. Optical waveguide plug part according to one of the preceding claims, in which the clamping part and/or the contact carrier has a colour marking for identifying the position of the optical waveguide in the optical waveguide plug part.

13. Optical waveguide plug part according to one of the preceding claims, in which at least one seal is arranged on the clamping part.

14. Optical waveguide plug part according to Claim 13, in which the seal is an O-ring seal, and/or in which the seal is arranged along the opening of the contact carrier in which the clamping part is, or can be arranged for securing the optical waveguide, and/or in which there is provided a (further) seal which is arranged in such a way that the fibre of the optical waveguide can be plugged through the seal.

15. Optical waveguide plug part according to Claim 13 or 14, in which the clamping part has a flange and/or a groove for holding the seal, and/or in which the contact carrier has a groove and/or a step for holding the seal.

## Revendications

1. Pièce de connecteur pour guide d'onde optique d'un connecteur de liaison de guide d'onde optique pour un guide d'onde optique, qui comprend une fibre et une gaine, comprenant un porte-contact pour recevoir le guide d'onde optique et au moins une pièce de serrage pour bloquer le guide d'onde optique dans le porte-contact,
**caractérisée en ce que** la pièce de serrage comprend un premier tronçon de serrage avec au moins une et de préférence plusieurs barrettes de serrage dégagées et/ou analogues à des colonnes pour serrer la gaine du guide d'onde optique et un second tronçon de serrage avec au moins une et de préférence plusieurs barrettes de serrage dégagées et/ou analogues à des colonnes pour serrer la fibre du guide d'onde optique.

2. Pièce de connecteur pour guide d'onde optique selon la revendication 1, dans laquelle les barrettes de serrage dégagées et/ou analogues à des colonnes du premier et/ou du second tronçon de serrage sont agencées par paires de telle façon que les barrettes de serrage d'une paire respective sont agencées à l'opposé par rapport au guide d'onde optique.

3. Pièce de connecteur pour guide d'onde optique selon l'une des revendications précédentes, dans laquelle les barrettes de serrage dégagées et/ou analogues à des colonnes du premier tronçon de serrage présentent des arêtes coupantes pour couper dans la gaine du guide d'onde optique.

4. Pièce de connecteur pour guide d'onde optique selon l'une des revendications précédentes, dans laquelle les barrettes de serrage dégagées et/ou analogues à des colonnes du second tronçon de serrage présentent des arêtes coupantes pour couper dans la fibre du guide d'onde optique.

5. Pièce de connecteur pour guide d'onde optique selon la revendication 3 ou 4, dans laquelle les arêtes coupantes s'étendent sensiblement perpendiculairement à la direction dans laquelle le guide d'onde optique est enfiché ou enfichable dans la pièce de connecteur pour guide d'onde optique.

6. Pièce de connecteur pour guide d'onde optique selon l'une des trois revendications précédentes, dans laquelle les barrettes de serrage dégagées et/ou analogues à des colonnes du premier et/ou du second tronçon de serrage présentent en section transversale un profil semblable à celui d'un ardillon.

7. Pièce de connecteur pour guide d'onde optique selon l'une des revendications précédentes, dans laquelle au moins un ergot et de préférence plusieurs ergots sont réalisés dans le premier tronçon de serrage pour venir s'engager dans la gaine du guide d'onde optique, et/ou dans laquelle au moins un ergot et de préférence plusieurs ergots sont réalisés dans le second tronçon de serrage pour venir s'engager dans la fibre du guide d'onde optique,
et/ou dans laquelle au moins un ergot et de préférence plusieurs ergots sont réalisés dans le porte-contact pour venir s'engager dans la gaine et/ou dans la fibre du guide d'onde optique.

8. Pièce de connecteur pour guide d'onde optique selon la revendication 7, dans laquelle les ergots sont agencés et réalisés de telle façon qu'ils s'engagent dans la gaine et/ou dans la fibre du guide d'onde optique lors du montage,
et/ou dans laquelle les ergots sont agencés et réalisés de telle façon qu'ils traversent la gaine et/ou la fibre du guide d'onde optique lors du montage,
et/ou dans laquelle les ergots sont agencés et réalisés par paires et en opposition sur le porte-contact et sur la pièce de serrage,
et/ou dans laquelle les ergots sont agencés et réalisés en opposition par rapport à au moins une barrette de serrage ou à quelques barrettes de serrage et de préférence en opposition à toutes les barrettes de serrage sur le porte-contact.

9. Pièce de connecteur pour guide d'onde optique selon l'une des revendications précédentes, dans laquelle la pièce de serrage et/ou le
porte-contact sont réalisés au moins partiellement transparents et/ou translucides.

10. Pièce de connecteur pour guide d'onde optique selon l'une des revendications précédentes, dans laquelle la pièce de serrage est réalisée entièrement transparente et/ou translucide.

11. Pièce de connecteur pour guide d'onde optique selon l'une des revendications précédentes, dans laquelle le porte-contact est réalisé transparent et/ou translucide au moins dans la région du tronçon de réception pour la pièce de serrage.

12. Pièce de connecteur pour guide d'onde optique selon l'une des revendications précédentes, dans laquelle la pièce de serrage et/ou le porte-contact sont marqués de manière colorée pour désigner la position du guide d'onde optique dans la pièce de connecteur pour guide d'onde optique.

13. Pièce de connecteur pour guide d'onde optique selon l'une des revendications précédentes, dans laquelle au moins un joint est agencé sur la pièce de serrage.

14. Pièce de connecteur pour guide d'onde optique selon la revendication 13, dans laquelle le joint est un joint torique,
et/ou dans laquelle le joint est agencé le long de l'ouverture du porte-contact dans laquelle la pièce de serrage est agencée ou susceptible de l'être pour bloquer le guide d'onde optique,
et/ou dans laquelle un (autre) joint est prévu, agencé de telle façon que la fibre du guide d'onde optique peut être enfilée à travers le joint.

15. Pièce de connecteur pour guide d'onde optique selon la revendication 13 ou 14, dans laquelle la pièce de serrage comporte une bride et/ou une gorge pour recevoir le joint,
et/ou dans laquelle le porte-contact comporte une gorge et/ou un gradin pour recevoir le joint.
